# EUROPEAN PATENT APPLICATION

(11) **EP 1 953 949 A1**
(43) Date of publication of application: **06.08.2008**
(21) Application number: 07702146.7
(22) Date of filing: 19.01.2007
(51) Int. Cl.: H04L 7/00

(54) **AN IMPLEMENTING METHOD OF DATA SYNCHRONIZATION AND THE APPARATUS THEREOF**

(30) Priority: 19.01.2006 CN 200610033195; 12.07.2006 CN 200610098589
(71) Applicant: Huawei Technologies Co., Ltd., Longgang District Shenzhen 518129 (CN)
(72) Inventor: TIAN, Linyi, Guangdong 518129 (CN); KANG, Jiao, Guangdong 518129 (CN); GUO, Xiangzhou, Guangdong 518129 (CN)
(74) Representative: Thun, Clemens
(86) International application number: PCT/CN2007/000215
(87) International publication number: WO 2007/082486

(57) **Abstract**

A method for detecting and resolving the data synchronization conflict is disclosed by the present invention, and the method includes the following processes. The client and the server detect a conflict in data synchronization; acquire a conflict resolution result according to conflict detection data; and synchronize conflicted data according to the conflict resolution result. In the solution of the present invention, the conflict detection for the data to be synchronized is performed before the data synchronization between the client and the server, so the data may be transmitted and the data may not be transmitted are determined, then the synchronization time is shortened, and the flow of network traffic is reduced.

## Description

### Field of the Invention

The present invention relates to data synchronization technologies, and particularly, to a method for implementing data synchronization (DS), an apparatus.

### Background of the Invention

For the implementation of data synchronization between personal information and internal data of enterprise among multiple platforms and networks, Synchronization Markup Language (SyncML) is being developed by researchers at present. SyncML is to implement collaborative working between terminal users, device developers, basic component developers, data providers, application software providers and service providers, and implement data access in any network anywhere, at any moment by any terminal.

A typical application of SyncML is data synchronization between a mobile device and a network server. In addition, the SyncML can also be used in peer-to-peer data synchronization, such as data synchronization between two Personal Computers (PCs). In other words, any one of two PCs may be used as a client or a server, the client may initiate the data synchronization to the server, and the server may also initiate the data synchronization to the client.

Procedure for implementing data synchronization between a client and a server includes: after a parameter negotiation in a data synchronization initialization phase, the client and the server send the changed data to each other to implement the data synchronization.

There are many types of data synchronization between the client and the server, such as two-way synchronization, slow synchronization, one-way synchronization from client, refresh synchronization from client, one-way synchronization from server, refresh synchronization from server and server alerted synchronization.

The procedure of data synchronization may generally include three phases: a synchronization initialization phase, a synchronization phase and a synchronization acknowledgement phase. The processes of two-way data synchronization are hereinafter described as follows.

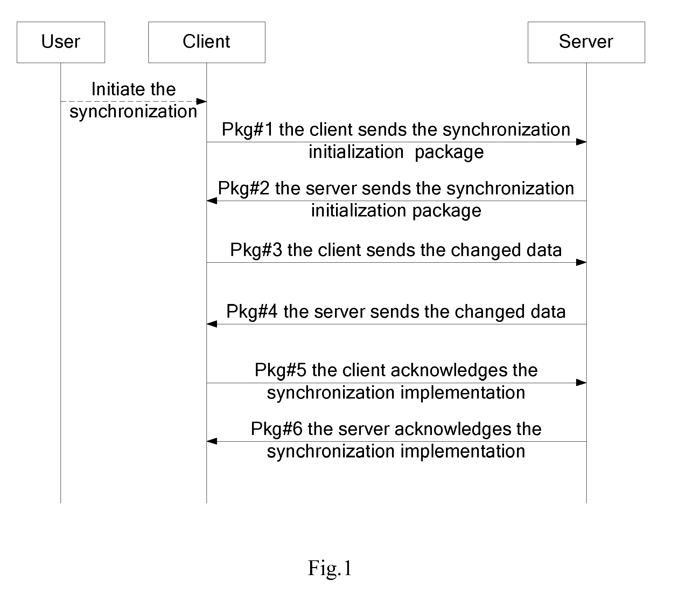

Figure 1 is a message flow schematic diagram illustrating two-way data synchronization. Referring to Figure 1, Pkg # 1 and Pkg # 2 are synchronization initialization phase. In the synchronization initialization phase, the system operates in order to implement an identification authentication, to implement a negotiation about the database needed to be synchronized, and to implement a negotiation about capability of synchronization. And the capability of synchronization includes the capability of negotiating which type of data, and which type of synchronization.

Pkg # 3 and Pkg # 4 are synchronization phase. In the synchronization phase, according to data status, for example, Add, Replace, Delete and Move, the client sends changed data to the server by some SyncML commands. The server performs the same operations according to the above mentioned commands, so as to implement the data synchronization. Likewise, the server may send changed data to the client by the SyncML commands.

Pkg # 5 and Pkg # 6 are synchronization acknowledgement phase, i.e. the client and the server acknowledge the synchronization implementation to each other.

A data synchronization system includes: a data synchronization client and a data synchronization server. The data synchronization client is called a client, which is generally an intelligent terminal including a client database for storing data required by the user. The intelligent terminal may be PC software, a mobile phone or a Personal Digital Assistant (PDA). The data required by the user may be a contact, a calendar, a note, a short message or an e-mail etc, which generally has a standard format. The client may send the data to the data synchronization server, upon converting the data according to the standard format. And the data synchronization server stores the data in the database upon processing the data.

The data synchronization server is called a server, which may receive data synchronization message from the data synchronization client, and send the data synchronization message to the data synchronization client. The data synchronization server may be a network server or a PC. In addition, the data synchronization server includes a server database.

For example, the data storage of the client and the server are shown in Table 1 and Table 2.

**Table 1**

| Local Unique Identifier (LUID) | Data Item |
|---|---|
| 11 | Car |
| 22 | Bike |
| 33 | Truck |
| 44 | Shoes |

**Table 2**

| Global Unique Identifier (GUID) | Data Item |
|---|---|
| 1010101 | Car |
| 2121212 | Bike |
| 3232323 | Truck |
| 4343434 | Shoes |

The client uniquely identifies a data item by a Local Unique Identifier (LUID). The LUID is used uniquely for a type of data or a terminal, i.e. the terminal identifies all data items by unique LUIDs. The server uniquely identifies a data item by a Global Unique Identifier (GUID), and the GUID is similar to the LUID. Because a terminal capacity is restricted, the LUID may be short in length and the GUID is long in length, and it is necessary to maintain a mapping table between the LUID and the GUID at the server, and format of the mapping table is shown in Table 3:

**Table 3**

| GUID | LUID |
|---|---|
| 1010101 | 11 |
| 2121212 | 22 |
| 3232323 | 33 |
| 4343434 | 44 |

The operations sent from a client to a server are as follows.

<Add> operation: The client sends a LUID generated and a data item generated for the LUID generated to the server; the server generates a GUID for the LUID generated after processing, and saves a mapping relationship of <LUID-GUID>.

<Replace> operation: The client sends an LUID and a data item to the server, so that the server performs a corresponding replacement.

<Delete> operation: An LUID is sent to the server; the server finds a GUID corresponding to the LUID according to the mapping relationship, and replaces the data corresponding to the GUID.

<Move> operation: The client points out an LUID of a data item to be moved, and a destination LUID, and a server performs related processes.

The operations sent from a server to a client are as follows.

<Add> operation: The server sends a GUID generated and a data item generated for the GUID generated to the client; the client returns an LUID to the server upon processing, and the server saves a mapping relationship of <LUID-GUID>.

<Replace> operation: The server sends an LUID and a data item to the client, so that the client performs a corresponding replacement.

<Delete> operation: The server sends an LUID to the client.

<Move> operation: The server points out an LUID of a data item to be moved, and a destination LUID; the client performs the related processes.

The case that a client and a server perform different modifications to the same data item is referred to as a conflict. For example, the client and the server perform different modifications to a vCard data item. Disadvantages of conventional data synchronization method are as follows.

(1) The client sends all of the data items to be synchronized to the server. When a modification conflict occurs between the client and the server, and a configured policy indicates that the modification of server is valid, then the server sends data modified by the server to the client. In that case, the data items sent from the client to the server not only has no essential functions, but also increases flow of network traffic, and prolongs synchronization time. When there are a large number of data items to be synchronized, the above mentioned disadvantage is especially obvious, for example, the client needs to send multiple music files of large size.

(2) When the client and the server perform different modifications to the same field of the same data item, a conflict detection is not performed, and a conflict is not resolved either.

(3) When the client and the server perform modifications to different fields of the same data item, it is determined as a conflict in the conventional data synchronization method, even though there is no conflict occurring really.

### Summary of the Invention

Embodiments of the present invention provide method and apparatus for detecting and resolving the data synchronization conflict. According to the method and apparatus of the present invention, a conflict is detected before data synchronization, and the conflict is resolved according to a resolution policy. So synchronization time is saved, and flow of network traffic is reduced according to the method and apparatus of the present invention.

Embodiments of the present invention provide a method for implementing data synchronization. The method for implementing data synchronization includes the following processes:

detecting a conflict in a data synchronization;

acquiring a conflict resolution result according to conflict detection data; and

synchronizing conflicted data according to the conflict resolution result.

Embodiments of the present invention provides an apparatus for detecting and resolving data synchronization conflict, the apparatus is a server and includes:

a server database configured to store data of a server;

a conflict detection unit configured to compare data received by a transceiver unit with data of the server database to perform the conflict detection, and send a conflict detection result to a conflict resolution unit;

the conflict resolution unit configured to acquire the conflict resolution result according to a configured conflict resolution policy and the conflict detection result;

the transceiver unit configured to receive conflict detection data, and synchronize the conflicted data with the client according to the conflict resolution result.

Embodiments of the present invention provides an apparatus for detecting and resolving data synchronization conflict, the apparatus is a client and includes:

a client storage unit, configured to store data of a client;

a transceiver unit, configured to send conflict detection data to a server, and synchronize the conflicted data with data of the server.

According to the above, embodiments of the present invention provide a method and apparatus for detecting and resolving the data synchronization conflict. The client and the server perform the conflict detection for the data to be synchronized before the data synchronization; if the conflict occurs, a resolution for the conflict may be performed according to a conflict resolution principle, which may determine the conflicted data correctly and transmit the conflicted data, so as to save synchronization time and reduce flow of the network traffic.

### Brief Description of the Drawings

Figure 1 is a schematic diagram illustrating a conventional two-way data synchronization procedure.

Figure 2 shows a flowchart of a first embodiment of the present invention.

Figure 3 shows a flowchart of a second embodiment of the present invention.

Figure 4 shows a flowchart of a third embodiment of the present invention.

Figure 5 shows a flowchart of a fourth embodiment of the present invention.

Figure 6 shows a flowchart of a fifth embodiment of the present invention.

Figure 7 is a basic internal structure chart illustrating a server provided by embodiment of the present invention.

Figure 8 is a basic internal structure chart illustrating a client provided by embodiment of the present invention.

### Detailed Description of the Invention

In order to make technical solution and merits of the present invention more apparent, a description is hereinafter given in detail with reference to embodiments and accompanying drawings of the present invention.

According to the present invention, a client and a server detect a conflict in data synchronization, acquire a conflict resolution result according to conflict detection data; and synchronize conflicted data according to the conflict resolution result.

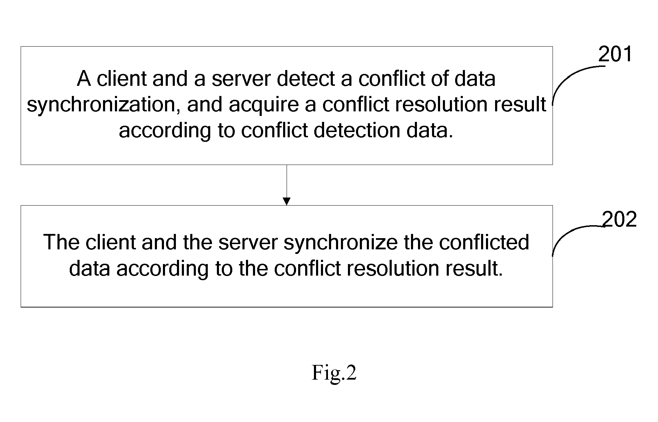

Figure 2 shows a flowchart of a first embodiment of the present invention. As shown in Figure 2, the method for detecting and resolving a data synchronization conflict is as follows.

In block 201, a client and a server detect a conflict of data synchronization, and acquire a conflict resolution result according to conflict detection data.

The process of acquiring the conflict resolution result is as follows: the client sends the conflict detection data to the server; the server performs the conflict detection according to the received conflict detection data, and acquires the conflict resolution result according to a configured conflict resolution strategy.

There are many methods for the server performing the conflict detection, which are described as follows.

If the conflict detection data includes an item ID, the conflict detection method includes the following processes. The server receives the conflict detection data, obtains the item ID, searches a server database according to the obtained item ID, determines the data item of the server corresponding to the obtained item ID, and detects the conflict according to the modification status information of the determined data item of the server.

In the above method, if the client modifies a data item and the server determines a corresponding data item in the server database has been modified, the server may directly determine that there is a conflict.

If the conflict detection data includes an item ID and item modification status information, the conflict detection method includes the following processes. The server receives the conflict detection data, obtains the item ID and item modification status information, searches the server database according to the obtained item ID, determines the data item of the server corresponding to the item ID, compares the obtained item modification status information with the modification status information in corresponding data item of the server, so that the server detects the conflict.

In the above method, if the client modifies a data item, and identifies a modification type, such as <Delete> or <Replace>, by item modification status information, the server may determine whether there is a conflict by comparing the status information modified by the client with the modification status of the server. In this case, a conflict detection principle may be configured for the server. For example: when the server and the client replace the same data item, the server determines that there is a conflict. Another example is as follows: the server and the client delete the same data item; the server determines that there is no conflict. Certainly, the conflict detection principle may be determined by the user using a solution of the present invention, the conflict detection principle is not described in detail hereafter.

If the conflict detection data includes an item ID and a modified field ID, the conflict detection method includes the following processes. The server receives conflict detection data, obtains the item ID and the modified field ID, determines a field of server database according to the obtained item ID and the modified field ID, and detects a conflict according to the field modification status information of the field information of the server.

In the above method, if the client modifies a field of a data item and the server determines the field of the corresponding data item in server database has been modified, the server may directly determine there is a conflict occurring.

If the conflict detection data includes an item ID, a modified field ID and field modification status information, the conflict detection method includes the following processes. The server receives conflict detection data, obtains the item ID, the modified field ID and the field modification status information, determines a field of server database according to the obtained item ID and the modified field ID, compares the obtained field modification status information with the field modification status information corresponding to the field of the server database, so that the server detects the conflict.

In the above method, if the client modifies a field of an item, and identifies a modification type, such as <Delete> and <Replace> etc., by the field modification status information, the server may determine whether there is a conflict by comparing the field modification status information of the client with the field modification status information of the server. In this case, a conflict detection principle may also be configured for the server. For example, when the server and the client replace the same field of a data item, the serve determines that there is a conflict. Another example is as follows: the server and the client modify the different fields of a data item; the server determines that there is no conflict.

If the conflict detection data includes an item ID, a modified field ID and a field checksum, the conflict detection method includes the following processes. The server receives conflict detection data, obtains the item ID, the modified field ID and the field checksum, determines a field in server database according to the obtained item ID and the modified field ID, and compares the obtained field checksum with the field checksum of corresponding field of the server, so that the server detects the conflict.

In the above solution, it is necessary to preset the field checksum for each field. The field checksum may be acquired by a Hash algorithm, and is used as a unique identifier of the field. When the field is modified, the field checksum of the field is changed accordingly. Therefore, the server may determine whether there is a modification according to the field checksum, and determine whether the modification is the same modification. If the obtained field checksum is the same as the field checksum of corresponding field of the server, the server determines that there is no conflict; the obtained field checksum is different from the field checksum of corresponding field of the server, the server determines that there is conflict.

If conflict detection data includes an item ID and an item fingerprint, the conflict detection method includes the following processes. The server receives the conflict detection data, obtains the item ID and the item fingerprint, determines a data item corresponding to the item ID in the server database according to the obtained item ID, compares the obtained item fingerprint with the item fingerprint of corresponding data item of the server, so that the server detects the conflict.

In the above solution, the item fingerprint is a unique identifier of data item, which may be a timestamp, a digest value, an anchor value or a version number of the data item; and the anchor value is the same as the Anchor value defined in the prior art. The server may directly determine whether the obtained item fingerprint is the same with the item fingerprint of corresponding data item of the server; if the obtained item fingerprint is the same with the item fingerprint of corresponding data item of the server, the serve determines that there is no conflict; if the obtained item fingerprint is different from the item fingerprint of corresponding data item of the server, the serve determines that there is conflict.

In practical applications, the conflict detection data may further include a combination between the item ID and the item modification status information, the field ID, the field modification status information, the item fingerprint. The combination mode may be determined by the user by the solution of the present invention, which will not be described in detail herein.

In practical applications, if the client and the server have a peer-to-peer relation, the server may send the conflict detection data to the client, the client performs the conflict detection for the conflict detection data, and acquires a conflict resolution result according to the conflict detection data. In this case, the client serves as role of the server, while the server serves as role of the client.

In block 202, the client and the server synchronize the conflicted data according to the conflict resolution result.

In this embodiment of the present invention, between the process in block 201 and the process in block 202, the process of the server returning the conflict resolution result to the client may be added or not. For example, between the server and the client there is a one-way synchronization from the server, the server may send the data to be synchronized to the client directly according to the conflict resolution result, after the server acquires the conflict resolution result. If there is two-way synchronization between the client and the server, the server needs to return the conflict resolution result to the client, after the server acquires the conflict resolution result. The client and the server send the data to be synchronized to each other according to the conflict resolution result.

In practical applications, when the server determines that there is a conflict, it is necessary to resolve the conflict according to a configured resolution strategy. The resolution strategy may be set by user according to the solution of the present invention, for example, a resolution strategy that the server has the priority, a resolution strategy that the client has the priority, a resolution strategy that the server and the client ignore each other, a resolution strategy for user requirement or a resolution strategy for timestamp. Other resolution strategies may also be introduced according to the practical applications, and the change of resolution strategy should be not regarded to limit the scope of the present invention.

If the resolution strategy that the server has priority is used, when there is a conflict, the server only needs to synchronize the item or field in server database with that of the client and sends to the client, and the client does not need to send the item or field to the server. So the flow of the network traffic is reduced.

If the resolution strategy that the client has priority is used, when there is a conflict, the client only needs to send the item or field of in client database to the server; and the server does not need to send the item or field to the client. So the flow of the network traffic is reduced.

If the resolution strategy that the client and the server ignore each other is used, when there is a conflict, the client and the server maintain the conflicted data respectively, and the client and the server do not need to send data to each other. So the flow of the network traffic is reduced.

If the resolution strategy for user requirement is used, when there is a conflict, the user may determine to perform the data synchronization by taking the data of the server or the client as a standard.

If the resolution strategy for timestamp is used, when there is a conflict, a modifying time may be determined according to a timestamp of the modified data. Data synchronization may be performed by taking the data of the server or the client as standard, according to a sequence of time of the server or the client modifying the data. For example, data synchronization may be performed by taking the data of the server or the client which modifies the data later as standard.

In practical applications, the process of detecting the data synchronization conflict of the client or the server may be implemented in a synchronization initialization phase or between an initialization phase and a synchronization phase, i.e. the process of detecting the data synchronization conflict of the client or the server is implemented before the synchronization phase.

The method of detecting and resolving the data synchronization conflict is hereinafter described with respect to several preferred embodiments of the present invention.

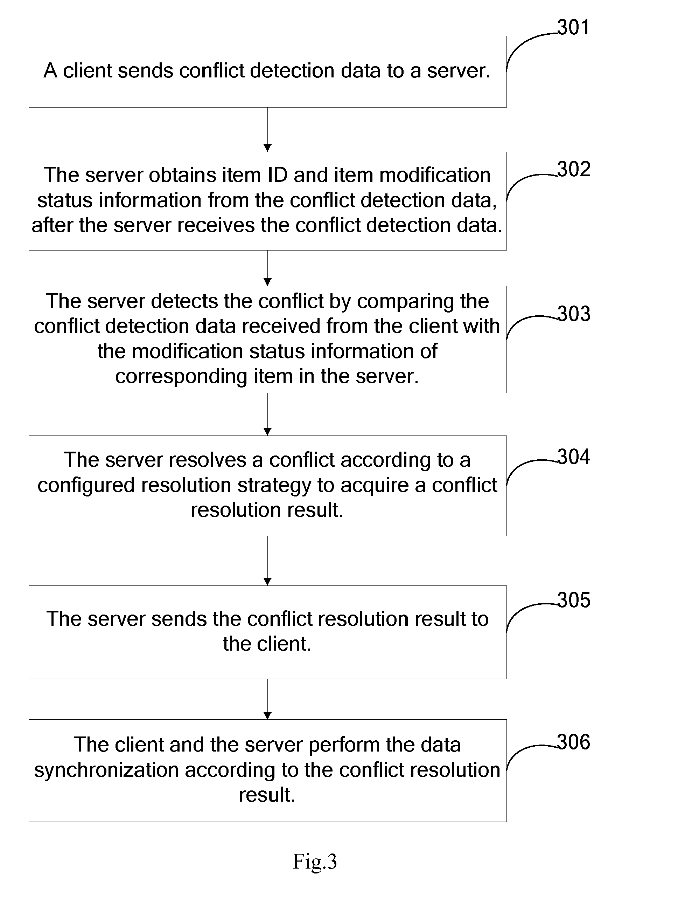

Figure 3 is a flowchart of a second embodiment of the present invention. In the second embodiment, a storage status of a client database is shown in Table 4.

**Table 4**

| LUID | First Name | Last Name | Telephone |
|---|---|---|---|
| 12 | John | Done | +650 5050403 |
| 13 | Mike | White | +13292662203 |
| 14 | Vincent | Brown | +14694322045 |
| 15 | Linyi | Pob | +12341122304 |
| 16 | Guo | Da | +11223344556 |

A storage status of a server database is shown in Table 5.

**Table 5**

| GUID | First Name | Last Name | Telephone |
|---|---|---|---|
| 1012 | John | Done | +16505050403 |
| 1013 | Mike | White | +13292662203 |
| 1014 | Vincent | Brown | +14694322045 |
| 1015 | Linyi | Pob | +12341122304 |
| 1016 | Guo | Da | +11223344556 |

A mapping table in the server database is shown in Table 6.

**Table 6**

| LUID | GUID |
|---|---|
| 12 | 1012 |
| 13 | 1013 |
| 14 | 1014 |
| 15 | 1015 |
| 16 | 1016 |

The client modifies the First Name in the item whose LUID is 12, deletes the item whose LUID is 13, moves the item whose LUID is 15 from a root directory to a "good friends" directory, and modifies the Last Name in the item whose LUID is 16. The modified database is shown in Table 7.

**Table 7**

| LUID | First Name | Last Name | Telephone | Modification status |
|---|---|---|---|---|
| 12 | Kang | Done | +1650505040 3 | Replace(First Name) |
| 13 | Mike | White | +1329266220 3 | Delete |
| 14 | Vincent | Brown | +1469432204 5 | No Change |
| 15 | Linyi | Pob | +1234112230 4 | Move("good friends") |
| 16 | Guo | Daa | +1122334455 6 | Replace(Last Name) |

The server deletes the item whose GUID is 1012, modifies the Last Name in the item whose GUID is 1013, and moves the item whose GUID is 1015 from the root directory to a "colleague" directory. The modified database is shown in Table 8.

**Table 8**

| GUID | First Name | Last Name | Telephone | Modification status |
|---|---|---|---|---|
| 1012 | John | Done | +16505050403 | Delete |
| 1013 | Mike | Smith | +13292662203 | Replace |
| 1014 | Vincent | Brown | +14694322045 | No Change |
| 1015 | Linyi | Pob | +12341122304 | Move ("colleague") |
| 1016 | Guo | Da | +11223344556 | No Change |

In the second embodiment of the present invention, the server may determine whether a conflict occurs according to a configured conflict detection principle.

The conflict principle is shown in Table 9.

**Table 9**

| Data | Client modification status | Server modification status | Detection result |
|---|---|---|---|
| The same item | Modify | Modify | Conflict |
| The same item | Delete | Modify | Conflict |
| The same item | Modify | Delete | Conflict |
| The same domain or field of the same item | Modification domain 1 | Modification domain 1 | Conflict |
| The different domains or fields of the same item | Modification domain 1 | Modification domain 2 | Not conflict, combination |
| The same item | Move | Modify | Conflict |
| The same item | Move | Delete | Conflict |
| The same item | Move | Move | If move to different directories, conflict; If move to the same directory, not conflict. |

In practical applications, there may be other principles for detecting the conflict, which will not be further described herein.

As shown in Figure 3, the method for detecting and resolving the data synchronization conflict of the second embodiment is as follows.

In block 301, a client sends conflict detection data to a server.

In the second embodiment, the client modifies data items whose LUID are 12, 13, 15 and 16 respectively, and sends item ID and item modification status information corresponding to the LUID to the server, the item ID and item modification status information corresponding to the LUID are regarded as the conflict detection data.

In practical applications, there are many methods for the client sending the conflict detection data to the server, for example, the conflict detection data may be sent to the server by an added synchronization command or an extended synchronization command.

If the added synchronization command is used, the added synchronization command may be represented as an XML format. For example, the added synchronization command may be named as <ConflictDetect>; the conflict detection data carried in the added synchronization command at least includes an ID of data object and a modification status of data object. And the conflict detection data may further includes any combination of a timestamp, a modified field name, a modified field status and a checksum generated by the modified data. The conflict detection data may be carried in one label or multiple labels of the <ConflictDetect>. The added synchronization command of XML format is hereinafter described according to several embodiments.

For example, the added synchronization command may be organized according to the following format, i.e. a data object ID is included in different elements according to modification status of the data object. The added synchronization command is as follows.

<ConflictDetect>

<CmdID>5</CmdID>

<modified data ID> 11,13,14</modified data ID>

<deleted data ID> 15,16</deleted data ID>

</ConflictDetect>

The added synchronization command may be organized according to the following format, i.e. the data object ID and the data modification status of the data object are uniformly included in one element. The added synchronization command is as follows.

<ConflictDetect>

<CmdID>5</CmdID>

<data item>

<modified data ID>11</modified data ID>

<modification status>delete</modification status>

</data item>

<data item>

<modified data ID>12</modified data ID>

<modification status>replace</modification status>

</data item>

</ConflictDetect>

The added synchronization command may be organized according to the following format, i.e. the data object IDs are included in different elements according to different modification status of data object, one ID is included in one element. And the added synchronization command is as follows.

<ConflictDetect>

<CmdID>5</CmdID>

<modified data ID>

<ID> 11</ID>

<ID> 12</ID>

</modified data ID>

</ConflictDetect>

The added synchronization commands with different formats are included in the scope of the present invention.

The process of sending the conflict detection data from the client to the server may also be implemented by extending the definition of the existing synchronization command, for example extending the definition of the existing <Alert> command, <Add> command or other commands such as <Replace> command and <Delete> command. If the <Replace> command and the <Delete> command are used, the <Replace> command and the <Delete> command have implied modification status information, for example, the <Replace> command represents a replacing and the <Delete> represents a deleting, and a sub element of the <Replace> command or the <Delete> command may carry one or more item IDs.

The solution of the client sending the conflict detection data is hereinafter given by extending the definition of the <Alert> command. If the client sends the conflict detection data to the server in synchronization initialization phase, the conflict detection data may be carried in the <Alert> command in the initialization phase, and the format of the <Alert> command is as follows.

<Alert>

<CmdID>5</CmdID>

.....

<modified data ID>

<ID> 11 </ID>

<ID> 12</ID>

</modified data ID>

</Alert>

The example of carrying an item ID and modification status information by the <Replace> command is as follows.

<Replace>

<CmdID>5</CmdID>

.....

<ID>11</ID>

<ID> 12</ID>

</Replace>

The above mentioned information may be carried by one or multiple <Replace> commands, or by one or multiple <Delete> commands.

In practical applications, alternatively a new label may be defined in the synchronization procedure to indicate the above mentioned information, for example, a <ConflictDetect> label is defined to indicate the conflict detection data, and the Document Type Definition (DTD) of the <ConflictDetect> label is defined as follows.

(CmdID, Cmd, Source, SoureParent?, Target, TargetParent?, Cred?, Data*)

The "*" indicates that the label may occur zero or more times, and the "?" indicates the label may occur zero or one time.

The client sends the <ConflictDetect> label to the server; the server compares the <ConflictDetect> label with modification of the server, resolves the conflict according to a configured strategy, and returns a conflict resolved result to the client. For example, if the client modifies the First Name (FN) field and the Last Name (LN) field of a data item whose LUID is 15 in the client database, the conflict detection data sent from the client to the server is as follows.

<Conflict>

<CmdID>5</CmdID>

<Cmd>indicate the ongoing operation is (Replace)</Cmd>

<Source><LocURI>indicate the LUID of modified data item is 15 </LocURI></Source>

<Data>indicate the modified field is FN and LN</Data>

</Conflict>

The modified field may be carried in the <Data> label according to the CGI syntax. The CGI syntax denotes logical relation between data by logical operators, for example "&AND;" denotes a logical "and", "&OR;" denotes a logical "or". There are many other operators, such as "&EQ;", "&iEQ;", "&NE;", "&iNE;", "&CON;" and "&iCON;".

The above mentioned modification may be represented in the <Data> label according to the CGI syntax as follows.

<Data>FN&AND;LN</Data>

The synchronization command returned by the server is as follows.

<Status>

<CmdID>4</CmdID>

<MsgRef>2<MsgRef><CmdRef>5</CmdRef><Cmd>Conflict</ Cmd>

<Data>the server returns a status code for the above Conflict label</Data>

</Status>

In practical applications, alternatively the conflict detection data may be represented by the extended existing label definition.

In the existing SyncML, the client and the server return an operational status code in a <Status> label, as a response to the synchronization command, to each other. The DTD of the existing <Status> label is:

(CmdID, MsgRef, CmdRef, Cmd, TargetRef*, SourceRef*, Cred?, Chal?, Data, Item*)

To implement the idea of "first resolving the conflict and then synchronization", the <Status> label may be extended; some optional elements may be added into the <Status> label. The optional elements include: Source, SourceParent, Target, TargetParent. Then the extended <Status> label not only may be used to return a status code for the command from the opposing party, but also may be used to carry the conflict detection data. The modified DTD of <Status> label is as follows.

(CmdID, MsgRef*, CmdRef*, Cmd, Source?, SoureParent?, Target?, TargetParent?, TargetRef*, SourceRef*, Cred?, Chal?, Data*, Item*)

The extended <Status> labels with different formats are included in the scope of the present invention.

In block 302, the server receives the conflict detection data, and obtains item ID and item modification status information from the conflict detection data.

In this embodiment, the server receives the item IDs and the item modification status information of the items whose LUID is 12, 13, 15 or 16 in the client. The item modification status information is "Replace", "Delete", "Move" or "Replace". The server also receives field ID and field modification status information of First Name field of the item whose LUID is 12, and receives field ID and field modification status information of Last Name field of the item whose LUID is 16.

In practical applications, alternatively the client may only send the item ID to the server, or send the item ID and the field ID to the server. The contents of the conflict detection data sent from the client to the server, and the method of the server performing the conflict detection may be determined by the user, which will not be further described herein.

In addition, in this embodiment, the server needs to search the server database through a mapping relation between the client item ID and the server item ID in Table 6, when the server searches the server database according to the received client item ID. In practical applications, the client item ID may also directly correspond to the server item ID, without using the mapping relation in Table 6. In the prior art, a mapping mechanism between LUID and GUID may be changed, but the data between the client and the server still have the corresponding relation; the client and the server find a corresponding data according to client item ID and server item ID. The change of the mapping mechanism should not be regarded to a limit of the present invention.

In block 303, the server detects the conflict by comparing the conflict detection data received from the client with the modification status information of corresponding item in the server.

In this embodiment, the server may perform the conflict detection for the conflict detection data received from the client according to the conflict principle as shown in Table 9. Certainly, after the conflict detection, the server determines that the item whose LUID is 12 is not conflicted, and the items whose LUID is 13 and 15 are conflicted, it is necessary to perform a conflict resolution.

In block 304, the server resolves a conflict according to a configured resolution strategy to acquire a conflict resolution result.

In practical applications, the resolution strategy is configured in the server, and may be a resolution strategy that the server has the priority, a resolution strategy that the client has the priority, a resolution strategy that the server and the client ignore each other, a resolution strategy required by user, or a resolution strategy of timestamp. When the resolution strategy of timestamp is used, it is necessary to set a timestamp for each field of item, or for each item, record the last modification time, and send the last modification time to the server according to the process of in the block 301.

No matter which resolution strategy is configured in the server, the server may determine a resolution result for the detected conflict, and determine which item is needed to be sent from the client to the server, and which item is needed to be sent from the server to the client.

For example, in this embodiment, the resolution strategy that the server has priority is configured, the client and the server use a two-way synchronization type, and the resolution result of the server is as follows: it is needless for the client to send the data related to the items whose LUID is 1013 and 1015, and it is only necessary for the server to send the data related to the items whose LUID is 1013 or 1015 to the client.

In block 305, the server sends the conflict resolution result to the client.

In this embodiment, the server may send the conflict resolution result to the client by a newly added synchronization command or an extended synchronization command, which is similar to the process in the block 301.

For example, the server sends the conflict resolution result to the client by the newly added synchronization command represented by Extensible Markup Language (XML), such as the <ConflictResult> command. The client and the server may agree to use the <ConflictResult> command to only carry the ID of the data item which needs to be sent by the client, or may agree to use the <ConflictResult> command to carry the ID of the data item which does not need to be deleted by the client, or may agree to use the <ConflictResult> command to return all IDs and conflict resolution results etc of the data involved in the conflict detection. Several organization formats of <ConflictResult> command are hereinafter given.

When the ID of the data item which needs to be sent by the client is only carried in the <ConflictResult> command, the ID may be set uniformly in one element or one ID corresponding to one element, which is described as follows.

<ConflictResult>

<CmdID>8</CmdID>

<data item ID to be uploaded> 11,13,24</data item ID to be uploaded>

</ConflictResult>

Alternatively, all IDs of the data item performed the conflict detection and conflict resolution results may also be carried in the <ConflictResult> command; the ID of data item may be carried in different elements according to the conflict resolution result, which is described as follows.

<ConflictResult>

<CmdID>8</CmdID>

<data item ID to be uploaded> 11,12,13</data item ID to be uploaded>

<data item ID needless to be uploaded>14,15,16</data item ID needless to be uploaded>

<combined data item ID> 17</combined data item ID>

</ConflictResult>

The process of the server sending the conflict resolution result to the client may be implemented by extending the existing synchronization command definition, for example, extending the definition of <Status>. The above conflict resolution result may also be carried in the existing <Status> command. The client and the server may agree to use the <Status> to only carry the ID of the data item which need to be uploaded by the client, or may agree to use the <Status> to carry the ID of the data item which does not need to be deleted by the client, or may agree to use the <Status> to return all IDs and conflict resolution results etc of the data involved the conflict detection.

A solution for carrying the conflict resolution result is hereinafter given by extending the definition of <Status> command. In the above solution, the <Status> command is the response to the command carrying the conflict detection data, which is as follows.

<Status>

<CmdID>8</CmdID>

<response CmdID>7</response CmdID>

<response command name>command carrying the conflict detection data</response command name>

.....

<data item ID to be uploaded>11,12,13</data item ID to be uploaded>

</Status>

Alternatively, the existing <Status> command may be extended as the following.

<Status>

<CmdID>8</CmdID>

<response CmdID>7</response CmdID>

<response command name>Alert (command carrying the conflict detection data)</response command name>

.....

<data item ID to be uploaded>11</data item ID to be uploaded>

</Status>

In practical applications, the server sends the conflict resolution result to the client to notify the client which data item should be sent. If a data item is not conflicted, but the data item still needs to be sent from the client to the server, the conflict resolution result may also be used to notify the client. For example, in this embodiment, the data item whose LUID is 16 is not conflicted, but it is still necessary to notify the client to send the data associated with the data item whose LUID is 16 in order to achieve the two-way synchronization.

In block 306, the client and the server perform the data synchronization according to the conflict resolution result.

In practical applications, the client and the server implement the data synchronization according to a sync type negotiated in a synchronization initialization phase, such as, two-way synchronization, one-way synchronization from server only, and one-way synchronization from client only.

In practical applications, processes in blocks 301 to 305 of this embodiment may be implemented in the synchronization initialization phase or between the synchronization initialization phase and the synchronization phase. Processes in blocks 301 to 305 may be implemented by using an added synchronization command, or implemented by extending the existing synchronization command in the synchronization initialization phase. For example, the <Alert> command of initialization phase may be used to send the conflict detection data, and the <Status> command may be used to return the conflict resolution result.

In the above solution of the present invention, before the data synchronization, the conflict detection is performed, the conflict resolution is performed, and then the data synchronization may be performed according to the conflict resolution result. So the data needed to be transmitted is determined correctly; the synchronization time is shortened and the flow of the network traffic is reduced.

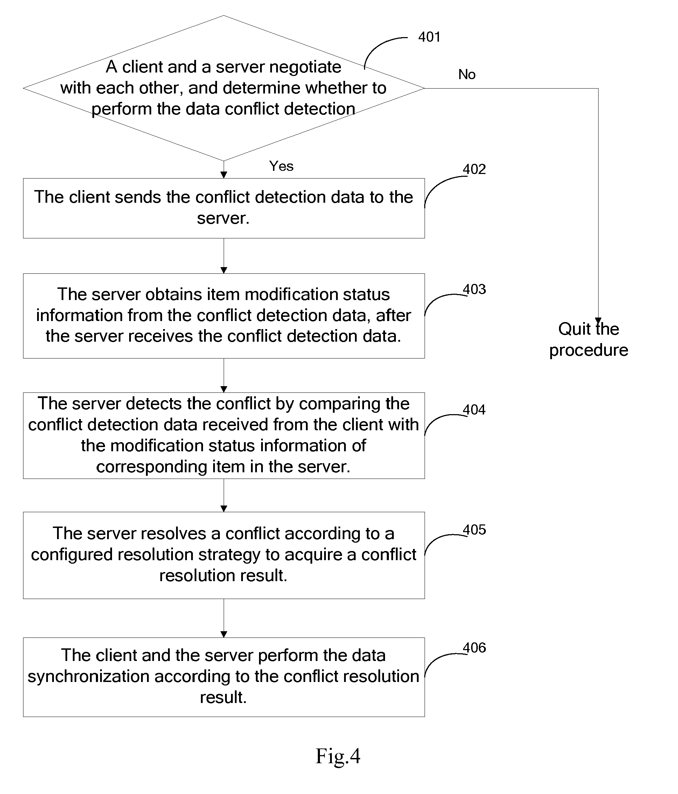

Figure 4 shows a flowchart of a third embodiment of the present invention. In the third embodiment, a client database includes the data contents shown in Table 10 and the server database includes the data contents shown in Table 11.

**Table 10**

| UID | First Name | Last Name | Telephone | Parents directory | Modification status |
|---|---|---|---|---|---|
| 11 | Kent | Niny | +1651 5050503 | Root directory | - |
| 12 | John | Done | +1650 5050403 | Root directory | - |
| 13 | Mike | White | +1329 2662203 | Root directory | - |
| 14 | Vincent | Brown | +1469 4322045 | Root directory | - |
| 15 | Linyi | Pob | +1234 1122304 | Root directory | - |
| 16 | Katy | Len | +1234 1122308 | Root directory | - |

**Table 11**

| UID | First Name | Last Name | Telephone | Parents directory | Modification status |
|---|---|---|---|---|---|
| 11 | Kent | Niny | +1651 5050503 | Root directory | - |
| 12 | John | Jao | +1650 5050403 | Root directory | - |
| 13 | Kite | Smith | +1469 4322045 | Root directory | - |
| 14 | Vincent | Brown | +1329 2662203 | Root directory | - |
| 15 | Liny | Pob | +1234 1122304 | Root directory | - |
| 16 | Katy | Len | +1234 1122308 | Root directory | - |

In the third embodiment, client item IDs are same with server item IDs, and client item IDs and server item IDs may directly correspond to each other without a mapping table. The client modifies First Names of the data items whose UID are 11 and 12, deletes the data item whose UID is 13, moves the data item whose UID is 15 from the root directory to a "good friends" directory, and adds the data item whose UID is 17. The data contents of the modified database are shown in Table 12.

**Table 12**

| UID | First Name | Last Name | Telephone | Parents directory | Modification status |
|---|---|---|---|---|---|
| 11 | Kenty | Niny | +1651 5050503 | Root directory | - |
| 12 | Kang | jao | +1650 5050403 | Root directory | Modify |
| 13 | Kite | Smith | +1469 4322045 | Root directory | Delete |
| 14 | Vincent | Brown | +1329 2662203 | Root directory | - |
| 15 | Lin | Pob | +1234 1122304 | "good friends" | Move |
| 16 | Katy | Len | +1234 1122308 | Root directory | - |
| 17 | Helen | Merry | +1 2341122333 | Root directory | Add |

The server modifies the Last Names of the data items whose UID are 12, 13 and 16, and moves the data item whose UID is 15 from the root directory to "colleague" directory. The data contents of the modified database are shown in Table 13.

**Table 13**

| UID | First Name | Last Name | Telephone | Parents directory | Modification status |
|---|---|---|---|---|---|
| 11 | Kent | Niny | +1651 5050503 | Root directory | - |
| 12 | John | June | +1650 5050403 | Root directory | Modify |
| 13 | King | Smith | +1469 4322045 | Root directory | Modify |
| 14 | Vincent | Brown | +1329 2662203 | Root directory | - |
| 15 | Liny | Pob | +1234 1122304 | "colleague" | Move |
| 16 | Katy | Lenny | +1234 1122308 | Root directory | Modify |

In the third embodiment, the field ID and field modification state information are not set in the field of the data item, and only the item ID and item status information are set for the data item.

The server may determine whether the conflict occurs according to a configured conflict principle. The conflict principle is shown in Table 14.

**Table 14**

| Data | Client modification status | Server modification status | Detection result |
|---|---|---|---|
| The same item | Modify | Modify | Conflict |
| The same item | Delete | Modify | Conflict |
| The same item | Modify | Delete | Conflict |
| The same item | Move | Modify | Conflict |
| The same item | Move | Delete | Conflict |
| The same item | Move | Move | Conflict |

As shown in Figure 4, a method for detecting and resolving the data synchronization conflict of the third embodiment is as follows.

In block 401, a client and a server negotiate with each other, and determine whether to perform data conflict detection; if determine to perform the data conflict detection, the process in block 402 is performed; if determine not to perform the data conflict detection, the procedure is terminated.

The objective of performing the negotiation is that, it is unnecessary to perform the conflict detection in some cases, which avoids transmission of unnecessary data. For example, if the resolution strategy of the server is a resolution strategy that client has priority, the data of the client must be sent to the server for replacing the data of the server in the conflict case, and it is unnecessary to send the conflict detection data; in addition, if the data of the server is not modified, the conflict does not occur, and it is unnecessary to perform the conflict detection.

In practical applications, there are many methods for negotiating the data of the client and the server. For example, a parameter indicating that conflict is preferentially resolved is configured in an initialization request. And when the client determines to perform the conflict detection of data synchronization, the client sends the server the parameter so that the server performs the conflict detection. The above procedure specifically includes the following processes.

In process X1, a client sends an initialization request to a server.

In process X2, the server determines whether the initialization request carries a parameter indicating conflict is preferentially resolved; if the initialization request does not carry the parameter indicating conflict is preferentially resolved, the server performs data synchronization according to the synchronization procedure mentioned in the background of the present invention, and quits this procedure; if the initialization request carries the parameter indicating conflict is preferentially resolved, the process X3 is performed.

In process X3, the server determines whether to agree on the synchronization type and the parameter indicating conflict is preferentially resolved in the initialization request; if the server determines to agree on the synchronization type and the parameter indicating conflict is preferentially resolved in the initialization request, the process in block 402 is performed; if the server determines to disagree on the synchronization type and the parameter indicating conflict is preferentially resolved in the initialization request, the process X4 is performed;

In process X4, negotiation of the data synchronization is performed by the client and the server to determine the synchronization type and synchronization procedure, and the synchronization is performed according to the determined synchronization procedure.

In practical applications, alternatively the server does not determine whether to agree on the parameter indicating conflict is preferentially resolved, the process in block 402 is performed directly when the server determines that there is the parameter indicating conflict is preferentially resolved. In other words, the method of the negotiation between the client and the server includes the following processes. The client sends the initialization request carrying the parameter indicating the conflict is preferentially resolved to the server, and notifies the server to perform the conflict detection.

In practical applications, a <GotoConflictDetect> element is added into an <Alert> command to indicate that client requests the conflict detection and an entrance of resolution phase;

<Alert>

......

<GotoConflictDetect/>

</Alert>

Alternatively, a "GotoConflictDetect" attribute is added into the <Alert> command, and is used to indicate that the client requests the conflict detection and the entrance of resolution phase;

<Alert GotoConflictDetect =true ........>

......

</Alert>

If the parameter indicating the conflict is preferentially resolved and the synchronization type are negotiated in the same <Alert> command, there are four status codes as follows in the Table 15.

**Table 15**

| Index No. | Description | Status code |
|---|---|---|
| 1 | Agree on the synchronization type Agree to preferentially resolve the conflict | 217 |
| 2 | Agree on the synchronization type Disagree to preferentially resolve the conflict | 218 |
| 3 | Disagree on the synchronization type Agree to preferentially resolve the conflict | 219 |
| 4 | Disagree on the synchronization type Disagree to preferentially resolve the conflict | 220 |

In this solution, the four status codes are necessary to be added, the status codes carries in the <Status> command to indicate the negotiation result. If the server disagrees on the synchronization type, the client and the server may re-negotiate the synchronization type.

When the synchronization type is negotiated at first, and the preferentially resolving conflict is further negotiated by a new <Alert> command, there may be two cases for this solution, which is shown in Table 16.

**Table 16**

| Index No. | Description | Status code |
|---|---|---|
| 1 | Agree to preferentially resolve the conflict | 217 |
| 2 | Disagree to preferentially resolve the conflict | 218 |

In practical applications, there may be different modes for adding status codes, which is within the protection range of the present invention.

In the data synchronization protocol, the client and the server may add the synchronization type status code of the synchronization in which conflict is preferentially resolved, or the synchronization type status code of synchronization in which the server alerts the client to perform synchronization. And a negotiation is performed according to the following processes.

In process Y1, a client sends an initialization request to a server.

In process Y2, the server determines whether to agree on the synchronization type indicated by the initialization request; if the server disagrees on the synchronization type, the client and the server determine the synchronization type according to a configured conflict resolving strategy of the synchronization type, then the process Y3 is performed; if the server agrees on the synchronization type, the process Y3 is performed directly.

In process Y3, the server determines whether the synchronization type is an existing synchronization type; if the synchronization type is the existing synchronization type, the synchronization is performed according to the synchronization procedure mentioned in the background of the present invention, and the procedure is quit; if the synchronization type is not the existing synchronization type, the process in the block 402 is performed.

In practical applications, the server may only determine that the synchronization type indicated by the initialization request is a newly added synchronization type, and the server does not determine whether to agree on the synchronization type indicated by the initialization request. The added synchronization type is a synchronization type in which the conflict is preferentially resolved, hereafter defined as a first synchronization type; or the added synchronization type is a synchronization type in which the server alerts the client to perform synchronization, hereafter defined as a second synchronization type. In the description of the present invention, the synchronization type in which the server alerts the client to perform synchronization is also called server alerted synchronization. In other words, if the added synchronization type is the first synchronization type, the method for the client and the server negotiating whether to perform the conflict detection includes the processes as follows.

In the client, the synchronization type status code of the first synchronization type is carried in the initialization request. The server determines to use the first synchronization type for data synchronization according to the synchronization type status code of the first synchronization type in the initialization request.

If the added synchronization type is a second synchronization type, the method for the client and the server negotiating whether to perform the conflict detection includes the processes as follows.

In the client, the synchronization type status code of the second synchronization type is carried in the initialization request. The server notifies the client of the first synchronization type for data synchronization according to the synchronization type status code of the second synchronization type in the initialization request.

The synchronization type status code of the first synchronization type may be one of the following synchronization type status code: a synchronization type status code of a synchronization type in which the conflict is preferentially resolved and a two-way synchronization is performed; and a synchronization type status code of a synchronization type in which the conflict is preferentially resolved and a slow synchronization is performed; and a synchronization type status code of a synchronization type in which the conflict is preferentially resolved and a one-way synchronization from client only is performed; a synchronization type status code of a synchronization type in which the conflict is preferentially resolved and a refresh synchronization from client only is performed; a synchronization type status code of a synchronization type in which the conflict is preferentially resolved and a one-way synchronization from server only is performed; a synchronization type status code of a synchronization type in which the conflict is preferentially resolved and a refresh synchronization from server only is performed.

The synchronization type status code of the second synchronization type may be one of the following synchronization type status code: a synchronization type status code of a synchronization type in which the server alerts the client to perform the synchronization, the conflict is preferentially resolved and the two-way synchronization is performed; a synchronization type status code of a synchronization type in which the server alerts the client to perform the synchronization, the conflict is preferentially resolved and the slow synchronization is performed; a synchronization type status code of a synchronization type in which the server alerts the client to perform the synchronization, the conflict is preferentially resolved and the one-way synchronization from client only is performed; a synchronization type status code of a synchronization type in which the server alerts the client to perform the synchronization, the conflict is preferentially resolved and the refresh synchronization from client only is performed is performed; a synchronization type status code of a synchronization type in which the server alerts the client to perform the synchronization, the conflict is preferentially resolved and the one-way synchronization from server only is performed; a synchronization type status code of a synchronization type in which the server alerts the client to perform the synchronization, the conflict is preferentially resolved and the refresh synchronization from server only is performed. In practical applications, if the client and the server perform the negotiation using the synchronization type status code of the second synchronization type, a process of sending a negotiation notification message from the server to the client is performed before the process Y1.

In practical applications, the method of the client and the server performing the negotiation includes the following processes.

The client sends an initialization request to the server firstly, and the server determines whether to perform the conflict detection according to a configured negotiation principle or a conflict resolution principle, then a negotiation result is returned to the client. If the server determines that it is unnecessary to perform the conflict detection, a synchronization processing procedure may be performed according to the prior art; if the server determines that it is necessary to perform the conflict detection, the processes in the block 402 are performed. The initialization request may include information used by the client to request for the conflict detection; alternatively the initialization request may not include the information used by the client to request for the conflict detection. The configured negotiation principle may be determined by the user using the solution of the present invention. For example, the configured negotiation principle in the server may be a negotiation principle in which the conflict detection is unnecessary. In addition, the server may determine whether to perform the conflict detection according to the conflict resolution principle, for example, if the conflict resolution principle that the server has the priority is set in the server, it is unnecessary to perform the conflict detection again.

In practical applications, alternatively the method of the client and the server performing the negotiation includes the following processes.

A server sends a negotiation notification message to a client. If the negotiation notification message indicates that it is unnecessary to perform conflict detection, the synchronization processing procedure may be performed according to the prior art; if the negotiation notification message indicates that it is necessary to perform conflict detection, the processes in the block 402 are performed. A notification message may be sent by a mail server through different methods, for example, short messages, WAP Push, Session Initial Protocol (SIP) Message and Multimedia short messages (MMS) etc.; or the notification message may be sent by the server through a notification package defined by the data synchronization protocol, for example, the notification message is sent by the server through the <Alert> command defined by the data synchronization protocol.

In practical applications, alternatively the method of the client and the server performing the negotiation may include the following processes.

A server sends a conflict resolution principle to a client; then the client directly determines whether to perform conflict detection according to the conflict resolution principle. For example, if the configured conflict resolution principle is a principle that the client has priority, i.e. the server and the client perform synchronization according to the requirement of client, the client determines it is unnecessary to perform the conflict detection, and the client needs to send the data to the server. That is because the server receives any modification of the client; and if a conflict occurs, the server may perform the modification according to the requirement of the client.

The server may return a result indicating whether to perform the conflict detection, or return a configured conflict resolution principle to the client, by extending the existing synchronization. For example, an indication indicating the client needs to perform the conflict detection is added in the <Status> command; alternatively, an element carrying the configured conflict resolution principle or an element carrying the status code identifying the conflict resolution principle is added in the <Status> command, then the client determines whether to perform the conflict detection.

In practical applications, the client and the server may perform the negotiation or may not perform the negotiation. If the negotiation is not performed, the processes in the block 401 may be omitted, and the following procedures are basically similar to the procedure of the first embodiment of the present invention.

In addition, in practical applications, the processes in the block 401 may be performed in the initialization phase, may be performed after the initialization phase.

The process in the blocks 402~405 are similar to the processes in the block 301~304 of the first embodiment of the present invention. The process in the blocks 402~405 will not be described in detailed.

The processes in the block 406 are the same as the processes in the block 306, which will not be described in detailed herein.

In the embodiment of the present invention, the client and the server may negotiate whether to perform the conflict detection in advance; if the client and the server need to perform the conflict detection in advance, the conflict detection and the subsequent operations are performed; if the client and the server need not to perform the conflict detection in advance, the data synchronization in the prior art is performed directly. In this way, a more flexible selection of the data conflict detection may be provided.

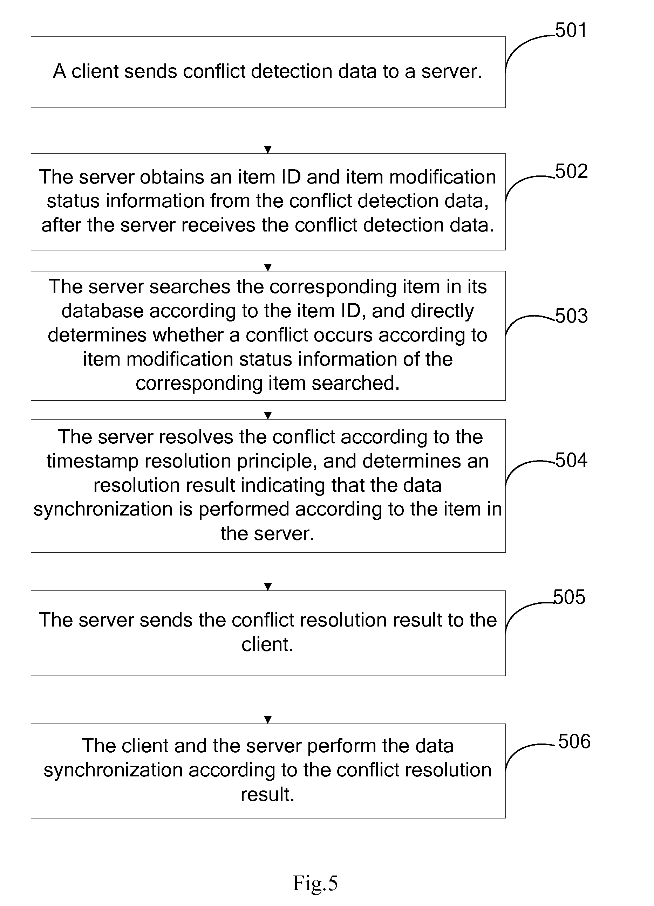

Figure 5 is a flowchart of the fourth embodiment of the present invention. In the fourth embodiment, a client modifies a file whose LUID is 11 and whose file name is "documents". The file size is 2M, the modification time of the file is 17:02 p.m., Nov. 26, 2005; the timestamp of the file in server is 18:30 p.m., Nov. 26, 2005. In the fourth embodiment of the present invention, a resolution principle configured in the server is a timestamp principle; and the data synchronization is performed according to the later modification time of the item, when the conflict occurs.

As shown in Figure 5, the method of detecting and resolving the data synchronization conflict in the fourth embodiment is as follows.

The processes in the blocks 501~503 are similar to the processes in blocks 301~303, except that, in the fourth embodiment of the present invention, the conflict detection data sent from the client to the server includes the timestamp representing the modification time, and doesn't include the modification status information of the item. The server obtains the item ID and the timestamp from the conflict detection data, searches the corresponding item in the server database according to the item ID, and directly determines whether a conflict occurs according to item modification status information of the corresponding item searched. For example, no matter which item of the server database is modified, the server determines that the conflict occurs.

The modification information of the file may be represented in a conflict detection data format.

<ConflictDetect>

<CmdID>4</CmdID>

<Cmd>status of file is Replace<Cmd>

<Source><LocURI>file LUID is 11 </LocURI></Source>

<Data>indicate the modifying time of file (for example: modification&EQ;20051126T170200)<Data>

</ConflictDetect>

In block 504, the server resolves the conflict according to the timestamp resolution principle, and determines a resolution result indicating that the data synchronization is performed according to the item in the server.

The processes in blocks 505 and 506 are similar to the processes in blocks 305 and 306 of the first embodiment. And the processes in blocks 505 and 506 will not be described in detailed herein.

In the fourth embodiment of the present invention, the server receives the conflict detection data including the timestamp information, obtains the item ID and timestamp information from the conflict detection data, searches the database according to the item ID, determines the corresponding item, and directly determines whether the conflict occurs according to the item modification status information of the item searched. For example, no matter which item of the server database is modified, the server determines that the conflict occurs. Then, the server compares the timestamp of the conflict detection data with the timestamp of the item of the server, determines that the file modification time with timestamp 18:30 p.m., Nov. 26, 2005 is latter according to the timestamp principle. And then a resolution result is acquired, indicating that the client does not need to send the data and the server needs to send the data, At last, the file of the server is sent to the client for data synchronization.

As can be seen from the above mentioned, the transmission flow of synchronization data is decreased, the synchronization time is shortened, and the network traffic flow is reduced.

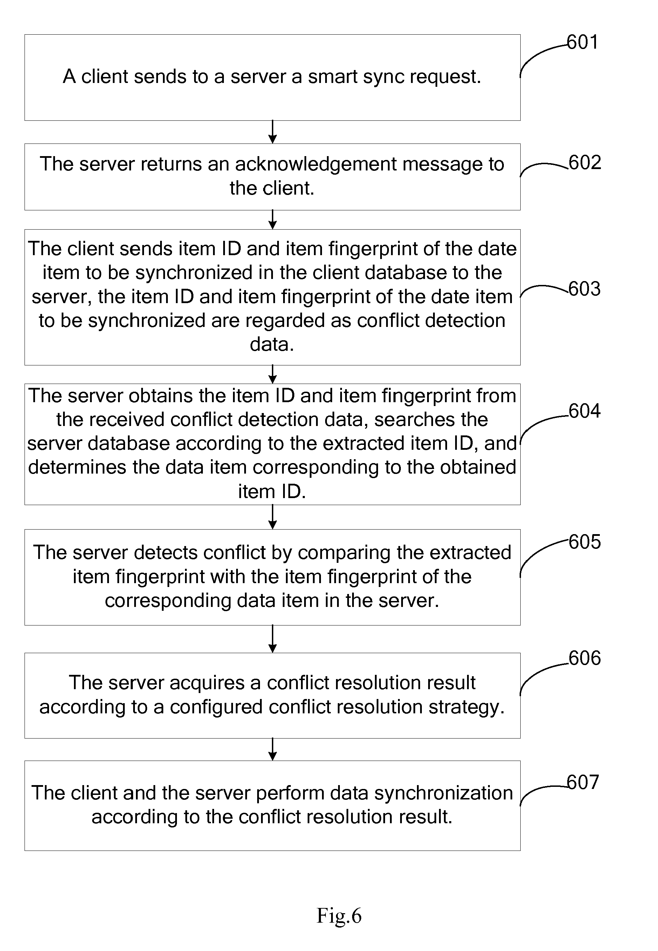

Figure 6 shows a flowchart of the fifth embodiment of the present invention. In the fifth embodiment, contents of the client database are shown in Table 17, and contents of the server database are shown in Table 18.

**Table 17**

| LUID | Name | Status | Fingerprint |
|---|---|---|---|
| 1 | A | | Fa |
| 2 | B | | Fb |
| 3 | C | | Fc |
| 4 | D | | Fd |
| 5 | E | | Fe |
| 6 | F | | Ff |

**Table 18**

| LUID | GUID | Name | Status | Fingerprint |
|---|---|---|---|---|
| 1 | 1001 | A | | Fa |
| 2 | 1002 | B | | Fb |
| 3 | 1003 | C | | Fc |
| 4 | 1004 | D | | Fd |
| 5 | 1005 | E | | Fe |
| 6 | 1006 | F | | Ff |

In the fifth embodiment, a client modifies Name field to "Be" for the item whose LUID is 2, modifies Fingerprint field to "Fb1" for the item whose LUID is 2, modifies Name field to "De" for the item whose LUID is 4, modifies Fingerprint field to "Fd1" for the item whose LUID is 4, deletes the item whose LUID is 5, and adds an item whose LUID is 7, whose Name field is "H" and whose Fingerprint field is "Fh". And, the server modifies Name field to "Cs" for the item whose GUID is 1003, modifies Fingerprint field to "Fc1" for the item whose GUID is 1003, modifies Name field to "Ds" for the item whose GUID is 1004, modifies Fingerprint field to "Fd1" for the item whose GUID is 1004, deletes the item whose GUID is 1006, and adds the item whose GUID is 1008.

As shown in Figure 6, the method of detecting and resolving the data synchronization conflict of the fifth embodiment is as follows.

In block 601, a client sends to a server a smart sync request.

The core idea of the smart sync includes the following processes: setting an item fingerprint for each data in the client database and the server database; during the data synchronization process, verifying the item fingerprint at first, i.e. comparing the item fingerprint set for the data in the client database with that in the server database, distinguishing the data to be synchronized and the obsolete data according to the comparing; transmitting the data to be synchronized in the subsequent data synchronization phase, and avoiding the transmission of obsolete data.

In block 602, the server returns an acknowledgement message to the client.

In block 603, the client sends item ID and item fingerprint of the date item to be synchronized in the client database to the server, the item ID and item fingerprint of the date item to be synchronized are regarded as conflict detection data.

In block 604, the server obtains the item ID and item fingerprint from the received conflict detection data, searches the server database according to the obtained item ID, and determines the data item corresponding to the obtained item ID.

In block 605, the server detects conflict by comparing the obtained item fingerprint with the item fingerprint of the corresponding data item in the server.

In the fifth embodiment, when the server determines that the obtained item fingerprint is different from the item fingerprint of the data item in the server, it is determined that the conflict occurs. In other words, there is no conflict occurring to the data item whose LUID is 1, there are conflicts occurring to the data items whose LUID are 2~6; and there is no conflict occurring to the data item whose LUID is 7 and the data item whose LUID is 1008.

In block 606, the server acquires a conflict resolution result according to a configured conflict resolution strategy.

In the fifth embodiment, the server may set a resolution strategy that the server has priority. In practical applications, other resolution strategies, such as the resolution strategy that client has priority, may also be set.

In block 607, the client and the server perform data synchronization according to the conflict resolution result.

In the fifth embodiment, if the client and the server use a two-way synchronization, the server needs to send the data items whose GUID are 1002~1005 to the client, and notifies the client to delete the data item whose LUID is 6. In addition, the server may need to notify the client to send the data item whose LUID is 7, and the server sends the data item whose GUID is 1008 to the client.

In practical applications, if the item fingerprints are calculated uniformly by the client, the client may calculate the fingerprint of the data item at first, and then allocate the item ID for the data item after acquiring the data item whose GUID is 1008 in different phases. Thereafter, the client returns the item ID and item fingerprint of the data item to the server in synchronization acknowledgement phase.

If the server is able to calculate the item fingerprint, the server may send the item fingerprint whose GUID is 1008 to the client directly after the server calculates the item fingerprint, and the client only needs to return the item ID allocated for the data item to the server in the synchronization acknowledgement phase.

In addition, in practical applications, the item fingerprint may be one of the following values: a digest value, timestamp, an anchor value or a version number of the data item.

In accordance with the method of detecting and resolving the data synchronization conflict of the present invention, an apparatus for detecting and resolving the data synchronization conflict is disclosed in the following embodiments.

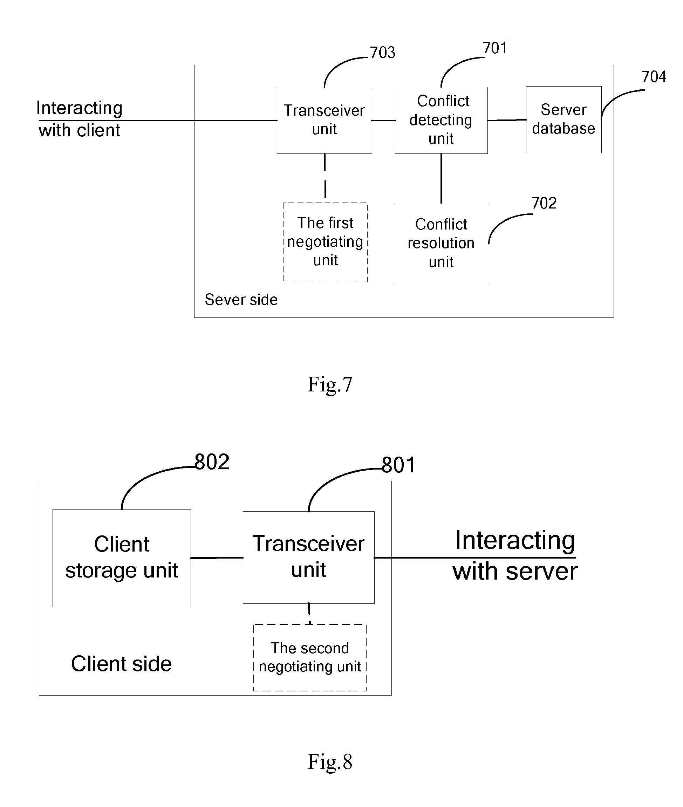

Figure 7 is a basic internal structure chart illustrating a server provided by an embodiment of the present invention. As shown in Figure 7, the server at least includes the following units:

a conflict detecting unit 701 which is configured to compare data received by transceiver unit 703 with data of server database 704 to perform conflict detection, and send a conflict detection result to conflict resolution unit 702;

a conflict resolution unit 702, which is configured to acquire the conflict resolution result according to a configured conflict resolution strategy and the conflict detection result;

a transceiver unit 703, which is configured to receive conflict detection data, and perform a data synchronization with the client according to the conflict resolution result;

a server database 704,which is configured to store data of the server.

Figure 8 is a basic internal structure chart illustrating a client provided by an embodiment of the present invention. As shown in Figure 8, the client at least includes the following units:

a transceiver unit 801, which is configured to send conflict detection data saved by client storage unit 802 to a server, and perform a data synchronization with the server;

a client storage unit 802, which is configured to store data of the client.

Furthermore, before the server and the client perform a conflict detection, if the server and the client are able to negotiate whether to perform the conflict detection, a negotiating unit for negotiating whether to perform conflict detection may be included in the server and the client.

Certainly, the method of the server and the client negotiating and performing conflict detection is similar to the method of detecting and resolving the data synchronization conflict in the first to fifth embodiments of the present invention, which will not be described in detailed herein.

With the solution of embodiments of the present invention, the conflict may be detected directly according to the item ID of data item; if the conflict occurs, the conflict resolution result may be acquired according to the conflict resolution strategy, and which data should be transmitted and which data need not be transmitted may be determined, so the synchronization time may be saved, and the traffic flow of the network may be reduced.

The foregoing descriptions are preferred embodiments of the present invention, and are not for use in limiting the protection scope thereof. Any modification, equivalent replacement and improvement made under the principle of the present invention should be included in the protection scope thereof.

## Claims

1. A method for implementing data synchronization, comprising:
detecting a conflict in data synchronization;
acquiring a conflict resolution result according to conflict detection data; and
synchronizing conflicted data according to the conflict resolution result.

2. The method of Claim 1, wherein detecting the conflict in data synchronization and acquiring a conflict resolution result according to conflict detection data comprise:
sending, by a client, the conflict detection data to a server;
performing, by the server, a conflict detection according to the conflict detection data; and
acquiring, by the server, the conflict resolution result according to a configured conflict resolution strategy.

3. The method of Claim 2, further comprising:
sending, by the server, the conflict resolution result to the client.

4. The method of Claim 2 or 3, wherein the conflict detection data comprises an item ID of data item of the client; and
performing by the server the conflict detection according to the conflict detection data comprises:
receiving, by the server, the conflict detection data;
obtaining the item ID from the conflict detection data;
determining the data item of the server corresponding to the item ID by searching a server database according to the item ID; and
detecting the conflict according to item modification status information of the determined data item of the server.

5. The method of Claim 4, wherein the conflict detection data further comprises item modification status information of the data item of the client;
the method further comprises:
obtaining, by the server, the item modification status information from the conflict detection data; and
detecting the conflict according to item modification status information of the determined data item of the server comprises:
comparing, by the server, the obtained item modification status information with the corresponding item modification status information of the server to detect the conflict.

6. The method of Claim 2 or 3, wherein the conflict detection data comprises item ID and modified field ID of data item of the client;
performing by the server the conflict detection according to the conflict detection data comprises:
receiving, by the server, the conflict detection data;
obtaining the item ID and the modified field ID from the conflict detection data;
determining, by the server, a field in a server database according to the obtained item ID and modified field ID; and
detecting the conflict according to field modification status information of the field.

7. The method of Claim 6, wherein the conflict detection data further comprises field modification status information or a field checksum of data item of the client;
the method further comprises:
obtaining, by the server, the field modification status information or the field checksum from the conflict detection data; and
detecting the conflict according to field modification status information of the field comprises:
comparing, by the server, the obtained field modification status information with the corresponding field modification status information in the server to detect the conflict; or
comparing, by the server, the obtained field checksum with the corresponding field checksum in the server to detect the conflict.

8. The method of Claim 2 or 3, wherein the conflict detection data comprises item ID and item fingerprint of data item of the client;
performing by the server a conflict detection according to the conflict detection data comprises:
receiving, by the server, the conflict detection data;
obtaining the item ID and the item fingerprint from the conflict detection data;
determining, in the server database, by the server, a data item corresponding to the obtained item ID; and
comparing the obtained item fingerprint with the item fingerprint of the data item corresponding to the obtained item ID to detect the conflict.

9. The method of Claim 8, wherein the item fingerprint comprises one of the following:
a timestamp, a digest value, an anchor value or a version number of the data item.

10. The method of Claim 2 or 3, wherein sending by the client the conflict detection data to the server comprises:
sending, by the client, the conflict detection data to the server by one of the following: an added synchronization command and an extended synchronization command.

11. The method of Claim 3, wherein sending by the server the conflict resolution result to the client comprises:
sending, by the server, the conflict resolution result to the client by one of the following: an added synchronization command and an extended synchronization command.

12. The method of Claim 6, further comprising:
if the client and the server modify different fields of the same data item, determining, by the server, that there is no conflict when the conflict detection is performed, and combining the data item modified by the server and the data item modified by the client after the data synchronization.

13. The method of Claim 2 or 3, further comprising:
negotiating, by the client and the server, whether to perform the conflict detection.

14. The method of Claim 13, wherein a synchronization type status code of the synchronization in which conflict is preferentially resolved is added in data synchronization protocol,
negotiating by the client and the server whether to perform the conflict detection comprises:
carrying, by the client, the synchronization type status code of the synchronization in which conflict is preferentially resolved in an initialization request;
determining, by the server, to use the synchronization in which conflict is preferentially solved according to the synchronization type status code.

15. The method of Claim 13, wherein a synchronization type status code of the synchronization in which server alerts client to perform synchronization is added in the data synchronization protocol;
negotiating by the client and the server whether to perform the conflict detection comprises:
carrying, by the client, the synchronization type status code of the synchronization in which server alerts client to perform synchronization in an initialization request;
notifying, by the server, the client of the synchronization in which conflict is preferentially solved according to the synchronization type status code of the synchronization in which server alerts client to perform synchronization.

16. The method of Claim 13, wherein a parameter indicating conflict is preferentially resolved is set;
negotiating by the client and the server whether to perform the conflict detection comprises:
carrying, by the client, the parameter indicating conflict is preferentially resolved in the initialization request sent to the server, and notifying the server of performing the conflict detection.

17. The method of Claim 13, wherein negotiating by the client and the server whether to perform the conflict detection comprises:
sending, by the client, an initialization request to the server;
determining, by the server, whether to perform the conflict detection according to a configured negotiation principle or a conflict resolution principle, and returning a negotiation result to the client;
sending, by the client, the conflict detection data to the server, when the client determines to perform the conflict detection according to the negotiation result.

18. The method of Claim 17, wherein the initialization request comprises information for requesting the conflict detection.

19. The method of Claim 13, wherein negotiating by the client and the server whether to perform the conflict detection comprises:
sending, by the server, a negotiation notification message to the client;
sending, by the client, the conflict detection data to the server, when the client determines to perform the conflict detection according to the negotiation notification command.

20. The method of Claim 13, wherein negotiating by the client and the server whether to perform the conflict detection comprises:
sending, by the server, a resolution principle to the client;
sending, by the client, the conflict detection data to the server, when the client determines to perform the conflict detection according to the resolution principle.

21. The method of Claim 2 or 3, wherein the configured conflict resolution strategy comprises a resolution strategy that the server has priority; and
synchronizing conflicted data according to the conflict resolution result comprises:
synchronizing, by the server, conflicted data saved in server with data of the client according to the conflict resolution result.

22. The method of Claim 2 or 3, wherein the configured resolution strategy comprises a resolution strategy that the client has priority; and
synchronizing conflicted data according to the conflict resolution result comprises:
synchronizing, by the client, conflicted data saved in the client with data of the server according to the conflict resolution result.

23. The method of Claim 2 or 3, wherein the configured resolution strategy comprises a resolution strategy that server and client ignore each other; and
synchronizing conflicted data according to the conflict resolution result comprises:
maintaining, by the client and the server, conflicted data respectively according to the conflict resolution result.

24. The method of Claim 2 or 3, wherein the configured resolution strategy comprises a resolution strategy for user requirement; and
synchronizing conflicted data according to the conflict resolution result comprises:
determining, by the user, to synchronize conflicted data by taking data of the client or the server as standard.

25. The method of Claim 2 or 3, wherein the configured resolution strategy comprises a resolution strategy for timestamp; and
synchronizing the conflicted data according to the conflict resolution result comprises:
determining a modification time of the client and the server for conflicted data according to the timestamp of modified data;
determining the data saved in the server or the client as a standard according to a sequence of the time determined;
synchronizing the conflicted data according to the standard determined.

26. A server for data synchronization, comprising a server database, a conflict detection unit, a conflict resolution unit, a transceiver unit, wherein
the server database is configured to store data of the server;
the conflict detection unit is configured to compare data received by the transceiver unit with data of the server database to perform the conflict detection, and send a conflict detection result to the conflict resolution unit;
the conflict resolution unit is configured to acquire the conflict resolution result according to a configured conflict resolution strategy and the conflict detection result; and
the transceiver unit is configured to receive conflict detection data, and synchronize the conflicted data with data of a client according to the conflict resolution result.

27. The server of Claim 26, further comprising:
a first negotiation unit, configured to negotiate with the client whether to perform the conflict detection.

28. A client for detecting and resolving data synchronization conflict, comprising:
a client storage unit, configured to store data of the client;
a transceiver unit, configured to send conflict detection data to a server, and synchronize the conflicted data with data of the server.

29. The client of Claim 28, further comprising:
a second negotiation unit, configured to negotiate with the server whether to perform the conflict detection.
